# EUROPÄISCHE PATENTSCHRIFT

(11) **EP 1 969 699 B1**
(45) Veröffentlichungstag und Bekanntmachung des Hinweises auf die Patenterteilung: **10.08.2011**
(21) Anmeldenummer: 06819360.6
(22) Anmeldetag: 09.11.2006
(51) Int. Cl.: H02K 5/173

(54) **ELEKTRISCHE MASCHINE MIT AXIALSPIELAUSGLEICH, SOWIE HERSTELLUNGSVERFAHREN EINER SOLCHEN MASCHINE**
ELECTRICAL MACHINE WITH AXIAL PLAY COMPENSATION, AND PRODUCTION METHOD FOR SUCH AN ELECTRICAL MACHINE
MACHINE ÉLECTRIQUE AVEC COMPENSATION DU JEU AXIAL ET PROCÉDÉ DE FABRICATION DE CELLE-CI

(30) Priorität: 29.12.2005 DE 102005062866
(43) Veröffentlichungstag der Anmeldung: 17.09.2008
(73) Patentinhaber: ROBERT BOSCH GMBH, 70442 Stuttgart (DE)
(72) Erfinder: HUESGES, Mario, 77830 Buehlertal (DE); HAWIGHORST, Achim, 77830 Buehlertal (DE)
(86) Internationale Anmeldenummer: PCT/EP2006/068283
(87) Internationale Veröffentlichungsnummer: WO 2007/079998

(56) Entgegenhaltungen:
- WO-A-02/19502
- WO-A-2004/040735
- DE-A1- 19 712 361
- DE-A1- 19 824 382

## Beschreibung

Die Erfindung betrifft eine elektrische Maschine, sowie ein Herstellungsverfahren einer solchen nach der Gattung der unabhängigen Ansprüche.

### Stand der Technik

Mit der DE 197 12 361 A1 ist eine Elektromotor mit einem Rotor bekannt geworden, bei dem die Ankerwelle mittels Gleitlager in einem Gehäuse gelagert ist. Dabei weist das Gehäuse einen topfähnlichen Fortsatz auf, an dem nach dem Einbau der Ankerwelle eine warzenförmige Deformation angeformt wird, die eine Schulter bildet, an der die Ankerwelle direkt anliegt. Dabei wird die Schulter solange umgeformt, bis das Axialspiel einen vorbestimmten Wert erreicht. Ein solches Montageverfahren hat den Nachteil, dass die Ankerwelle axial am Deformationsbereich anliegt, wodurch erhebliche Reibungsverluste des elektrischen Antriebs auftreten.

Die WO2004/040735 A1 und die WO02/19502 A1 zeigen jeweils eine elektrische Maschine gemäβ dem Oberbegriff des Anspruchs 1 , bei der eine Ankerwelle mittels eines Kugellagers an einem Lagerelement angeordnet ist. Das Lagerelement wird nach dessen axialer Einstellung im Gehäuse der Antriebsvorrichtung mittels eines Federelements mit dem Gehäuse verstemmt.

### Offenbarung der Erfindung

Die erfindungsgemäße Vorrichtung und das erfindungsgemäße Verfahren mit den Merkmalen der unabhängigen Ansprüche haben den Vorteil, dass durch das aufbringen einer Axialkraft auf ein Wälzlager die Reibungsverluste deutlich verringert werden, gegenüber dem direkten axialen Anpressen der Rotorwelle. Dadurch kann der Wirkungsgrad der elektrischen Maschine erhöht werden, und damit deren Bauvolumen verringert werden. Die Deformation des Gehäuseteils liegt hierbei direkt an der Bodenfläch der Distanzhülse und bewirkt ein axiales Anpressen des Hülsenmantels gegen den Außenring des Wälzlagers. Dadurch wird eine Reibung zwischen der Distanzhülse und der Rotorwelle verhindert.

Durch die in den Unteransprüchen aufgeführten Maßnahmen ergeben sich vorteilhafte Weiterbildungen und Verbesserungen der in den unabhängigen Ansprüchen angegebenen Merkmale. Weist das Wälzlager einen Außenring auf, in dem sich der drehfest mit der Rotorwelle angeordnete Innenring mittels Wälzkörper dreht, tritt an der Rotorwelle nur

Rollreibung auf. Das Axialspiel wird dabei über die am Außenring anliegende Distanzhülse minimiert, so dass die Distanzhülse nicht direkt an der Rotorwelle anliegt.

Günstig ist es, wenn die Distanzhülse topfförmig mit einer Bodenfläche und einen Hülsenmantel ausgebildet ist.

In einer bevorzugten Ausführung liegt der Außenring des Wälzlagers radial an der Distanzhülse an, welche sich wiederum radial am Gehäuseteil abstützt. Dadurch ist eine geringere Axialkraft für die axiale Verschiebung des Wälzlagers notwendig.

Das mindestens eine Wälzlager kann mittels lösbaren Sicherungselementen, oder unlösbar kraft- oder formschlüssig auf der Rotorwelle fixiert werden. Dadurch kann das zweite Lager der Rotorwelle über die auf den Außenring des ersten Wälzlagers einwirkende Axialkraft axial gegen das Gehäuse gepresst werden, um das Axialspiel zu minimieren.

Besonders günstig ist die Verwendung eines Gehäuseteils aus Metall, das beispielsweise gleichzeitig einen magnetischen Rückschluss bildet. Das Metall lässt sich einfach plastisch verformen und bleibt über lange Zeit formstabil. Daher kann z. B. prozesstechnisch günstig eine Deformationswarze an einer Stirnfläche gegenüberliegend zur Bodenfläche der Distanzhülse angeformt werden. Wird die Deformation radial mittig - auf der Rotorachse - angeformt, wird ein Verkanten der Distanzhülse vermieden.

Durch das erfindungsgemäße Herstellungsverfahren kann das Axialspiel sehr kostengünstig und zuverlässig unterbunden werden. Dabei können durch eine vorgebbare axiale Anpresskraft auch große Toleranzbereiche der einzelnen Bauteile ausgeglichen werden.

### Zeichnung

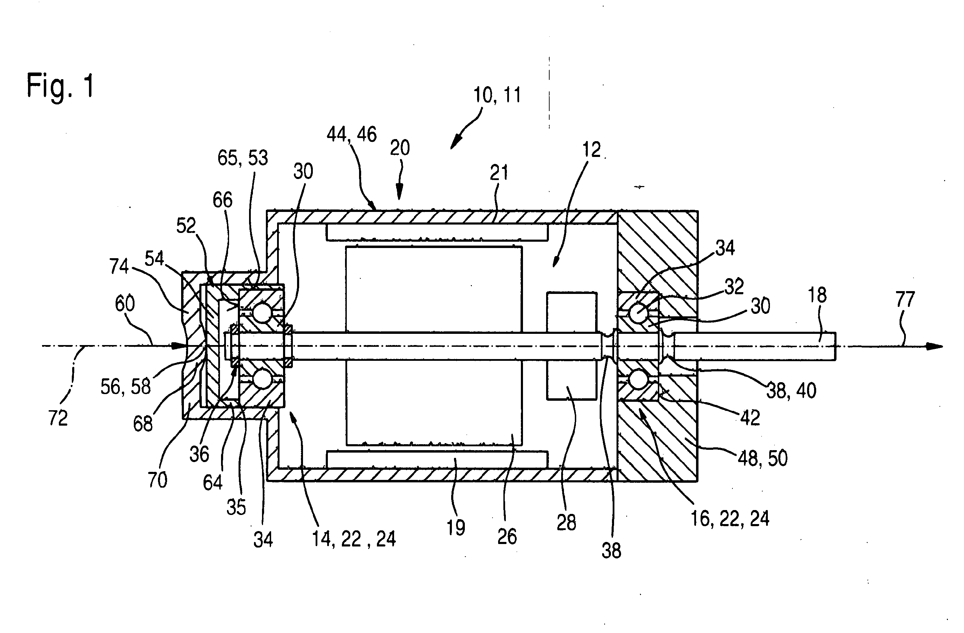

In der Zeichnung ist ein Ausführungsbeispiel einer erfindungsgemäßen Vorrichtung dargestellt und in der nachfolgenden Beschreibung näher erläutert. Es zeigt
Figur 1 einen Schnitt durch eine erfindungsgemäße elektrische Maschine.

### Beschreibung des Ausführungsbeispiels

In Figur 1 ist als eine elektrische Maschine 10 ein Elektromotor 11 dargestellt, bei dem ein Rotor 12 mittels eines ersten und eines zweiten Lagers 14, 16 in einem Gehäuse 20 gelagert ist. Hierbei sind beide Lager 14, 16, als Wälzlager 22, insbesondere als Kugellager 24 ausgebildet. Der Rotor 1 2 umfasst eine Rotorwelle 18, auf der ein Ankerpaket 26 mit einem Kollektor 28 angeordnet ist. Im Gehäuse 20, das einen Stator 21 bildet, sind Permanentmagneten 19 angeordnet, deren magnetisches Feld das bestromte Ankerpaket 26 in Rotation versetzt. Die beiden Lager 14, 16 weisen jeweils einen Innenring 30 auf, der mittels Wälzkörper 32 gegenüber einem Außenring 34 drehbar ist. Der Innenring 30 des ersten Lagers 14 ist mittels Sicherungsringen 36 drehfest auf der Rotorwelle 18 befestigt. In einer alternativen Ausführung, die am zweiten Lager 16 dargestellt ist, ist der Innenring 30 mittels plastischer Materialumformung 38 befestigt, die vorzugsweise als Rolliernut 40 ausgebildet ist. Das zweite Lager 16 ist in einem radialen und axialen Lagersitz 42 des Gehäuses 20 angeordnet. Das Gehäuse 20 weist ein als Poltopf 44 ausgebildetes erstes Gehäuseteil 46 auf, das axial mit einem zweiten Gehäuseteil 48 als Deckel 50 verschließbar ist. Der Außenring 34 des ersten Lagers 14 stützt sich mit einer axialen Anlagefläche 35 axial an einer Distanzhülse 52 ab, die mit einer Bodenfläche 54 axial am ersten Gehäuseteil 46 anliegt. Am ersten Gehäuseteil 46 ist ein Deformationsbereich 56 angeformt, der beispielsweise als Deformationswarze 58 ausgebildet ist und eine Axialkraft 60 auf die Distanzhülse 52 ausübt. Die Distanzhülse 52 weist einen Hülsenmantel 64 auf, und liegt mit einer ringförmigen Anpressfläche 66 am Außenring 30 an. In der oberen Bildhälfte ist eine Variation der Distanzhülse 52 dargestellt, bei der sich der Hülsenmantel 64 mit einem axialen Fortsatz 65 axial entlang des ersten Lagers 14 erstreckt. Dadurch bildet die Distanzhülse 52 einen Lagersitz 53 für den Außenring 34 des als Wälzlager 22 ausgebildeten ersten Lagers 14. Das erste Gehäuseteil 46 ist aus Metall, insbesondere aus Stahl gefertigt und weist an seinem Ende 68 zum ersten Lager 14 hin eine zylindrische Vertiefung 70 auf, in der die Distanzhülse 52 angeordnet ist. Der Deformationsbereich 56 ist an einer Stirnseite 74 der Vertiefung 70 radial mittig im Bereich der Rotorachse 72 angeordnet.

Zur Herstellung der elektrischen Maschine 10 wird zuerst die Distanzhülse 52 in axialer Richtung 77 in das erste Gehäuseteil 46 eingesetzt. Danach wird der Rotor 12 mit den darauf befestigten Lagern 14, 16 axial montiert, derart, dass sich der Außenring 34 des ersten Lagers 14 axial an der Distanzhülse 52 abstützt. Anschließend wird das zweite Gehäuseteil 48 mit dem ersten Gehäuseteil 46 verbunden, wobei das zweite Lager 16 in den Lagersitz 42 des zweiten Gehäuseteils 48 eingefügt wird. Nachdem das Gehäuse 20, 46, 48 komplett verschlossen ist, wird am ersten Gehäuseteil 46 am Ende 68 im Bereich des Lagers 14 eine plastische Deformation 56 angeformt, beispielsweise mit einem Dorn eingeprägt. Dadurch wird die Distanzhülse 52 gegen den Außenring 30 des ersten Lagers 14 gedrückt. Das zweite Lager 16 wird somit über die Rotorwelle 18 so weit axial in den Lagersitz 42 gepresst, bis das Axialspiel unter einen vorgebbaren Wert reduziert wird.

Es sei angemerkt, dass hinsichtlich der in den Figuren und in der Beschreibung dargestellten Ausführungsbeispiele vielfältige Kombinationsmöglichkeiten der einzelnen Merkmale untereinander möglich sind. So kann beispielsweise die konkrete Ausgestaltung der Wälzlager 22, deren Befestigung auf der Rotorwelle 18, sowie der Distanzhülse 52 variiert werden. Beispielsweise können die Lager 14, 16 auch angeschweißt, aufgepresst oder festgeklebt werden. Bevorzugt findet die erfindungsgemäße Maschine 10 Anwendung für Elektromotoren 11. die zur Verstellung beweglicher Teile im Kraftfahrzeug eingesetzt werden.

## Patentansprüche

1. Elektrische Maschine (10), insbesondere ein Elektromotor (11) zum Verstellen von beweglichen Teilen im Kraftfahrzeug, mit einem Gehäuse (20), in dem eine Rotorwelle (18) mittels eines ersten Lagers (14) und eines zweiten Lagers (16) drehbar gelagert ist, und das Gehäuse (20) an einem axialen Ende (68) der Rotorwelle (18) einen plastische Deformationsbereich (56) aufweist um ein Rotor-Axialspiel auszugleichen, wobei zumindest das erste Lager (14) als Wälzlager (22, 24) ausgebildet ist, das über eine axiale Anlagefläche (35) an einer Distanzhülse (52) anliegt, die sich axial am Deformationsbereich (56) abstützt, **dadurch gekennzeichnet, dass** die Distanzhülse (52) eine Bodenfläche (54) aufweist, die axial am Deformationsbereich (56) anliegt.

2. Elektrische Maschine (10) nach Anspruch 1, **dadurch gekennzeichnet, dass** zumindest das erste Lager (14) einen drehfest auf der Rotorwelle (18) befestigten Innenring (30) und einen drehfest gegenüber dem Gehäuse (20) angeordneten Außenring (34) aufweist, und die Distanzhülse (52) axial gegen den Außenring (34) gepresst wird.

3. Elektrische Maschine (10) nach einem der Ansprüche 1 oder 2, **dadurch gekennzeichnet, dass** die Distanzhülse (52) topfförmig ausgebildet ist und mit einer ringförmigen Anpressfläche (66) am Außenring (34) anliegt - wobei insbesondere die Distanzhülse (52) axial nicht an der Rotorwelle (18) anliegt.

4. Elektrische Maschine (10) nach einem der vorhergehenden Ansprüche, **dadurch** gekennzeichent, dass sich ein Hülsenmantel (64) der Distanzhülse (52) mit einem axialen Fortsatz (65) axial entlang des ersten Lagers (14) erstreckt.

5. Elektrische Maschine (10) nach einem der vorhergehenden Ansprüche, **dadurch gekennzeichnet, dass** die Distanzhülse (52) einen radialen Lagersitz (35) für das erste Lager (14) bildet.

6. Elektrische Maschine (10) nach einem der vorhergehenden Ansprüche, **dadurch gekennzeichnet, dass** zumindest das erste Lager (14) mittels Schweißen, Kleben, plastischer Materialumformung (38, 40) oder mittels Klemm- bzw. Sicherungselementen (36) drehfest auf der Rotorwelle (18) befestigt ist.

7. Elektrische Maschine (10) nach einem der vorhergehenden Ansprüche, **dadurch gekennzeichnet, dass** das zweite Lager (16) in einem radialen und axialen Lagersitz (42) des Gehäuses (20) angeordnet ist.

8. Elektrische Maschine (10) nach einem der vorhergehenden Ansprüche, **dadurch gekennzeichnet, dass** der Deformationsbereich (56) an einem Gehäuseteil (48) aus Metall - insbesondere an einem Poltopf (50) - angeordnet ist.

9. Elektrische Maschine (10) nach einem der vorhergehenden Ansprüche, **dadurch gekennzeichnet, dass** der Deformationsbereich (56) an einer Stirnfläche (74) des Gehäuses (20, 48) - insbesondere mittig, im Bereich der Rotorachse (72) - ausgebildet ist.

10. Verfahren zum Herstellen einer elektrischen Maschine (10), insbesondere nach einem der vorhergehenden Ansprüchen, mit einem Rotor (12), der mittels eines als Wälzlager (22) ausgebildeten ersten Lagers (14) und eines zweiten Lagers (16) in einem Gehäuse (20) gelagert ist mit den folgenden Schritten:
- in einem Gehäuseteil (46) der elektrischen Maschine (10) wird eine Distanzhülse (52) an einem axialen Ende (68) des Gehäuses (20, 46) angeordnet
- der Rotor (12) mit dem darauf befestigten ersten und zweiten Lager (14, 16) wird axial in das Gehäuseteil (20, 48) eingeführt, bis das erste Lager (14) axial an der Distanzhülse (52) anliegt
- das zweite Lager (16) wird in einem axialen Lagersitz (42) des Gehäuses (20, 48) fixiert
- das Ende (68) des Gehäuseteils (20, 46) wird derart plastisch deformiert, dass die Distanzhülse (52) axial gegen das erste Lager (14) und somit das zweite Lager (16) axial gegen den Lagersitz (42) gepresst wird, solange bis das Axialspiel des Rotors (12) im Gehäuse (20) definiert eingestellt ist.

11. Verfahren nach Anspruch 10, **dadurch gekennzeichnet, dass** das erste Lager (14) einen Außenring (34) aufweist, der drehfest gegenüber dem Gehäuse (20, 46) angeordnet ist, und die Distanzhülse (52) durch die plastische Deformation (56) mit einer ringförmigen Anpressfläche (66) axial gegen den Außenring (34) gepresst wird.

## Claims

1. Electrical machine (10), in particular an electric motor (11) for adjusting moving parts in a motor vehicle, having a housing (20) in which a rotor shaft (18) is rotatably mounted by means of a first bearing (14) and a second bearing (16), and the housing (20) has a plastic deformation region (56) at an axial end (68) of the rotor shaft (18) in order to compensate for axial play, with at least the first bearing (14) being in the form of a roller bearing (22, 24) which bears against a spacer sleeve (52), which is supported axially on the deformation region (56), by means of an axial bearing area (35), **characterized in that** the spacer sleeve (52) has a base area (54) which bears axially against the deformation region (56).

2. Electrical machine (10) according to Claim 1, **characterized in that** at least the first bearing (14) has an internal ring (30) which is mounted on the rotor shaft (18) in a rotationally fixed manner and an external ring (34) which is arranged in a rotationally fixed manner in relation to the housing (20), and the spacer sleeve (52) is pressed axially against the external ring (34).

3. Electrical machine (10) according to either of Claims 1 and 2, **characterized in that** the spacer sleeve (52) is in the form of a pot and bears against the external ring (34) by way of an annular contact-pressure area (66) - with, in particular, the spacer sleeve (52) not bearing axially against the rotor shaft (18).

4. Electrical machine (10) according to one of the preceding claims, **characterized in that** a sleeve casing (64) of the spacer sleeve (52) extends axially along the first bearing (14) by way of an axial projection (65).

5. Electrical machine (10) according to one of the preceding claims, **characterized in that** the spacer sleeve (52) forms a radial bearing seat (35) for the first bearing (14).

6. Electrical machine (10) according to one of the preceding claims, **characterized in that** at least the first bearing (14) is mounted on the rotor shaft (18) in a rotationally fixed manner by means of welding, adhesive bonding, plastic material deformation (38, 40) or by means of clamping and securing elements (36).

7. Electrical machine (10) according to one of the preceding claims, **characterized in that** the second bearing (16) is arranged in a radial and axial bearing seat (42) of the housing (20).

8. Electrical machine (10) according to one of the preceding claims, **characterized in that** the deformation region (56) is arranged on a metal housing part (48) - in particular on a pole pot (50).

9. Electrical machine (10) according to one of the preceding claims, **characterized in that** the deformation region (56) is formed on an end face (74) of the housing (20, 48) - in particular centrally, in the region of the rotor axis (72).

10. Method for producing an electrical machine (10), in particular according to one of the preceding claims, having a rotor (12) which is mounted in a housing (20) by means of a first bearing (14), which is in the form of a roller bearing (22), and a second bearing (16), comprising the following steps:
- a spacer sleeve (52) is arranged at an axial end (68) of the housing (20, 46) in a housing part (46) of the electrical machine (10),
- the rotor (12), together with the first and second bearings (14, 16) mounted on it, is inserted axially into the housing part (20, 48) until the first bearing (14) bears axially against the spacer sleeve (52),
- the second bearing (16) is fixed in an axial bearing seat (42) of the housing (20, 48),
- the end (68) of the housing part (20, 46) is plastically deformed in such a way that the spacer sleeve (52) is pressed axially against the first bearing (14) and therefore the second bearing (16) is pressed axially against the bearing seat (42) until the axial play of the rotor (12) in the housing (20) is set in a defined manner.

11. Method according to Claim 10, **characterized in that** the first bearing (14) has an external ring (34) which is arranged in a rotationally fixed manner in relation to the housing (20, 46), and the spacer sleeve (52) is pressed axially against the external ring (34) by the plastic deformation (56) by way of an annular contact-pressure area (66).

## Revendications

1. Machine électrique (10), notamment moteur électrique (11) pour le réglage de pièces mobiles dans un véhicule automobile, comprenant un boîtier (20), dans lequel est monté à rotation un arbre de rotor (18) au moyen d'un premier palier (14) et d'un deuxième palier (16), le boîtier (20) présentant à une extrémité axiale (68) de l'arbre de rotor (18) une zone de déformation plastique (56) afin de compenser un jeu axial du rotor, au moins le premier palier (14) étant réalisé sous forme de palier à roulement (22, 24) qui s'applique par le biais d'une surface d'appui axiale (35) contre une douille d'espacement (52) qui s'appuie axialement sur la zone de déformation (56), **caractérisée en ce que** la douille d'espacement (52) présente une surface de fond (54) qui s'applique axialement contre la zone de déformation (56).

2. Machine électrique (10) selon la revendication 1, **caractérisée en ce qu'**au moins le premier palier (14) présente une bague interne (30) fixée de manière solidaire en rotation sur l'arbre de rotor (18) et une bague externe (34) disposée de manière solidaire en rotation par rapport au boîtier (20), et la douille d'espacement (52) est pressée axialement contre la bague externe (34).

3. Machine électrique (10) selon l'une quelconque des revendications 1 ou 2, **caractérisée en ce que** la douille d'espacement (52) est réalisée en forme de pot et s'applique avec une surface de pressage de forme annulaire (66) sur la bague externe (34), la douille d'espacement (52), notamment, ne s'appliquant pas axialement contre l'arbre de rotor (18).

4. Machine électrique (10) selon l'une quelconque des revendications précédentes, **caractérisée en ce qu'**une enveloppe de douille (64) de la douille d'espacement (52) s'étend avec une saillie axiale (65) axialement le long du premier palier (14).

5. Machine électrique (10) selon l'une quelconque des revendications précédentes, **caractérisée en ce que** la douille d'espacement (52) forme un siège de palier radial (35) pour le premier palier (14).

6. Machine électrique (10) selon l'une quelconque des revendications précédentes, **caractérisée en ce qu'**au moins le premier palier (14) est fixé par soudage, collage, déformation de matériau plastique (38, 40) ou au moyen d'éléments de serrage ou de fixation (36) de manière solidaire en rotation sur l'arbre de rotor (18).

7. Machine électrique (10) selon l'une quelconque des revendications précédentes, **caractérisée en ce que** le deuxième palier (16) est disposé dans un siège de palier radial et axial (42) du boîtier (20).

8. Machine électrique (10) selon l'une quelconque des revendications précédentes, **caractérisée en ce que** la zone de déformation (56) est disposée sur une pièce du boîtier (48) en métal, notamment sur un pot polaire (50).

9. Machine électrique (10) selon l'une quelconque des revendications précédentes, **caractérisée en ce que** la zone de déformation (56) est réalisée sur une surface frontale (74) du boîtier (20, 48), notamment centralement, dans la région de l'axe du rotor (72).

10. Procédé pour fabriquer une machine électrique (10), en particulier selon l'une quelconque des revendications précédentes, comprenant un rotor (12), qui est monté au moyen d'un premier palier (14) réalisé sous forme de palier à roulement (22) et d'un deuxième palier (16) dans un boîtier (20), comprenant les étapes suivantes :
- une douille d'espacement (52) est disposée dans une pièce de boîtier (46) de la machine électrique (10) sur une extrémité axiale (68) du boîtier (20, 46),
- le rotor (12), avec le premier et le deuxième palier (14, 16) fixés sur lui, est introduit axialement dans la pièce de boîtier (20, 48), jusqu'à ce que le premier palier (14) s'applique axialement contre la douille d'espacement (52),
- le deuxième palier (16) est fixé dans un siège de palier axial (42) du boîtier (20, 48),
- l'extrémité (68) de la pièce de boîtier (20, 46) est déformée plastiquement de telle sorte que la douille d'espacement (52) soit pressée axialement contre le premier palier (14) et donc que le deuxième palier (16) soit pressé axialement contre le siège de palier (42), jusqu'à ce que le jeu axial du rotor (12) soit ajusté de manière définie dans le boîtier (20).

11. Procédé selon la revendication 10, **caractérisé en ce que** le premier palier (14) présente une bague externe (34) qui est disposée de manière solidaire en rotation par rapport au boîtier (20, 46), et la douille d'espacement (52) est pressée par déformation plastique (56) avec une surface de pressage annulaire (66) axialement contre la bague externe (34).
